(19) **Europäisches Patentamt European Patent Office Office européen des brevets**

(11) **EP 4 603 526 A1**

(12) **EUROPEAN PATENT APPLICATION**
published in accordance with Art. 153(4) EPC

(43) Date of publication:
**20.08.2025 Bulletin 2025/34**

(21) Application number: **23877527.4**

(22) Date of filing: **18.09.2023**

(51) International Patent Classification (IPC):
**C08G 63/60** *(2006.01)* **C09D 5/03** *(2006.01)*
**C09D 167/03** *(2006.01)*

(52) Cooperative Patent Classification (CPC):
**C08G 63/60; C09D 5/03; C09D 167/03;**
**Y02W 30/62**

(86) International application number:
**PCT/KR2023/014082**

(87) International publication number:
**WO 2024/080599 (18.04.2024 Gazette 2024/16)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **14.10.2022 KR 20220132210**

(71) Applicants:
• **SK Chemicals Co., Ltd.**
**Seongnam-si, Gyeonggi-do 13494 (KR)**
• **Entis Co., Ltd.**
**Seongnam-si, Gyeonggi-do 13494 (KR)**

(72) Inventors:
• **LEE, Yoo Jin**
**Seongnam-si, Gyeonggi-do 13494 (KR)**
• **IM, Soon Hyuk**
**Seongnam-si, Gyeonggi-do 13494 (KR)**
• **SONG, Yong-sub**
**Seongnam-si, Gyeonggi-do 13494 (KR)**
• **SEO, Sang Won**
**Seongnam-si, Gyeonggi-do 13494 (KR)**

(74) Representative: **Berggren Oy**
**P.O. Box 16**
**Eteläinen Rautatiekatu 10A**
**00101 Helsinki (FI)**

(54) **POLYESTER RESIN CONTAINING RECYCLED MONOMER AND POWDER COATING COMPOSITION CONTAINING SAME**

(57) This invention relates to polyester resin comprising recycled monomers and a powder coating composition comprising the same.

**EP 4 603 526 A1**

**Description**

[Technical Field]

Cross-reference to Related Application

This application claims priority benefit of Korean Patent Application No. 10-2022-0132210 filed on October 14, 2022 in the Korean Intellectual Property Office, the disclosure of which is incorporated herein by reference in its entirety.
This invention relates to polyester resin comprising recycled monomers and a powder coating composition comprising the same.

[Background Art]

Powder coating is applied for a coating method of coating a surface to be coated by an electrostatic method and melting and uniformizing powder particles through heat drying such as thermosetting, thereby improving a coated film. This coating, compared to liquid paint, has the low risk of poisoning by volatilization of a solvent and low fire risk, is convenient to work, and is easy to recycle, and thus, is required in a variety of fields.
Representative raw materials of the powder coating include polyester. Since polyester has excellent mechanical strength, heat resistance, transparency and gas barrier property, it is suitable for use as powder coating. Besides powder coating, polyester is being produced worldwide as materials of beverage filling containers, packaging films, audio and video films, and the like, industrial materials such as medical fiber or tire cord, and the like. Since a polyester sheet has good transparency and excellent mechanical strength, it is being widely used as materials of cases, boxes, partitions, store shelves, protection panels, blister packaging, building materials, interior and exterior materials, and the like.
Meanwhile, waste plastic accounting for about 70% of marine pollution has recently become a serious social problem, and thus, every country is regulating the use of disposable plastic and simultaneously is planning recycling of waste plastic. A method of recycling waste plastic may be largely classified into two methods, one recovering, grinding and cleaning waste plastic, and then, melt-extruding it to re-pelletize, and using it as raw material, and the other using materials obtained by depolymerization of waste plastic as monomers for the synthesis of plastic. In the latter case, by depolymerization of PET or PETG, among waste plastics, bis-2-hydroxyethylterephthalate may be obtained, and studies for using it as monomers of polyester copolymer have been conducted.
Thus, the inventors of the present disclosure confirmed that by using recycled bis-2-hydroxyethyl terephthalate as copolymerization monomers of the polyester resin with controlling the amount used, the uniform qualities of polyester resin prepared from material obtained by depolymerization of waste plastic and a powder coating composition comprising the same may be realized, and completed the invention.

[Disclosure of Invention]

[Technical Problem]

It is an object of the invention to provide a polyester resin and a powder coating composition comprising the same that comprise recycled monomers but realize uniform qualities.

[Technical Solution]

In order to achieved the object, there is provided a polyester resin polymerized from

1) recycled bis-2-hydroxyethyl terephthalate,
2) acid comprising dicarboxylic acid or derivatives thereof, and
3) polyhydric alcohol different from the recycled bis-2-hydroxyetyl terephthalate, and

having a structure in which a part derived from the bis-2-hydroxyethyl terephthalate, a part derived from the dicarboxylic acid or derivatives thereof, and a part derived from the polyhydric alcohol are repeated,
wherein the part derived from the recycled bis-2-hydroxyethyl terephthalate is included in the content of 1 to 50 parts by weight, based on 100 parts by weight of the polyester resin.

**Definitions of terms**

The polyester resin according to the invention relates to a copolymer prepared by copolymerization of dicarboxylic acid or derivatives thereof, and polyhydric alcohol, wherein recycled bis-2-hydroxyethyl terephthalate participates in the reaction during the copolymerization process.

The term 'derive' means a certain part or unit derived from a specific compound included in the product of a chemical reaction, when the specific compound participates in the chemical reaction. Specifically, an acid part derived from dicarboxylic acid or derivatives thereof, and an alcohol part derived from polyhydric alcohol respectively mean a repeat unit in polyester copolymer formed by an esterification reaction or a condensation polymerization reaction. Further, a part derived from bis-2-hydroxyethyl terephthalate means a repeat unit in polyester copolymer formed by an esterification reaction in the copolymerization reaction.

**Recycled bis-2-hydroxyethyl terephthalate**

As used herein, the term 'recycled bis-2-hydroxyethyl terephthalate' means material obtained from waste plastic collected after use. As the waste plastic from which bis-2-hydroxyethyl terephthalate can be obtained, PET and PETG, and the like may be mentioned. For example, bis-2-hydroxyethyl terephthalate can be obtained from PET collected after use, by glycolysis, hydrolysis, methanolysis, and the like, and such methods are widely known in the art.

Since the recycled bis-2-hydroxyethyl terephthalate passes many chemical steps during the process of obtaining it from waste plastic, in case it is used as monomers of copolymer, product qualities may be inevitably deteriorated. Particularly, in case it is used as monomers of polyester resin, color quality may be deteriorated, and by-products may be generated in large quantities as described later.

Thus, in the present disclosure, the recycled bis-2-hydroxyethyl terephthalate is used as the main monomers constituting the polyester resin according to the invention, but the polyester resin is controlled such that it may comprise the recycled bis-2-hydroxyethyl terephthalate in the content of 1 to 50 parts by weight, based on 100 parts by weight of the polyester resin. If the part derived from the recycled bis-2-hydroxyethyl terephthalate is greater than 50 parts by weight, color quality and transparency of the polyester copolymer may be deteriorated, and if it is less than 1 part by weight, utilization of recycled monomers may be insufficient.

Preferably, the part derived from the recycled bis-2-hydroxyethyl terephthalate is included in the content of 2 parts by weight or more, 3 parts by weight or more, or 4 parts by weight or more, and 45 parts by weight or less, 40 parts by weight or less, 35 parts by weight or less, or 30 parts by weight or less, based on 100 parts by weight of the polyester resin.

**Acid comprising dicarboxylic acid or derivatives thereof**

Dicarboxylic acid or a derivative thereof used herein means main monomers constituting polyester copolymer together with a polyhydric alcohol component. Particularly, the acid comprises aromatic dicarboxylic acid or derivatives thereof, and aliphatic dicarboxylic acid or derivatives thereof.

The aromatic dicarboxylic acid or derivatives thereof may be C8-20, preferably C8-14 aromatic dicarboxylic acid or derivatives thereof, or a mixture thereof. Examples of the aromatic dicarboxylic acid or derivatives thereof may include one or more selected from the group consisting of terephthalic acid, isophthalic acid, phthalic acid, trimellitic acid, 2,6-naphthalene dicarboxylate, diphenyl dicarboxylic acid, 4,4'-stilbenedicarboxylic acid, 2,5-furanedicarboxylic acid, 2,5-thiophenedicarboxylic acid, dimethyl terephthalate, dimethyl isophthalate, trimellitic anhydride, and phthalic anhydride, but specific examples of the aromatic dicarboxylic acid are not limited thereto.

Preferably, the part derived from aromatic dicarboxylic acid or derivatives thereof may be included in the content of 20 to 80 parts by weight, based on 100 parts by weight of the polyester resin. In case the part derived from aromatic dicarboxylic acid or derivatives thereof is included in the above content range, the properties of the polyester resin according to the invention may be improved, and it may be suitable for use as powder coating as described later. More preferably, the part derived from aromatic dicarboxylic acid or derivatives thereof may be included in the content of 25 parts by weight or more, 30 parts by weight or more, or 35 parts by weight or more, and 75 parts by weight or less, 70 parts by weight or less, or 65 parts by weight or less, based on 100 parts by weight of the polyester resin.

Meanwhile, in the polyester resin according to the invention, the acid may comprise aliphatic dicarboxylic acid or derivatives thereof. Wherein, the aliphatic dicarboxylic acid may be alicyclic dicarboxylic acid comprising one or more rings, or it may be linear or branched aliphatic dicarboxylic acid without rings. The aliphatic dicarboxylic acid or derivatives thereof may be C4-20, preferably C4-12 aliphatic dicarboxylic acid or derivatives, or a mixture thereof. The aliphatic dicarboxylic acid or derivatives thereof may include one or more selected from the group consisting of linear, branched or cyclic aliphatic dicarboxylic acid components such as adipic acid, succinic acid, sebacic acid, isodecylsuccinic acid, maleic acid, fumaric acid, glutaric acid, azelaic acid, and the like, cyclohexanedicarboxylic acid such as 1,4-cyclohexanedicarboxylic acid, 1,3-cyclohexanedicarboxylic acid, and the like, and hexahydrophthalic anhydride, but specific examples of the aliphatic dicarboxylic acid are not limited thereto.

Preferably, the part derived from aliphatic dicarboxylic acid or derivatives thereof may be included in the content of 1 to 15 parts by weight, based on 100 parts by weight of the polyester resin. In case the part derived from aliphatic dicarboxylic acid or derivatives thereof is included in the above content range, impact resistance and appearance property of powder coating may be improved, and simultaneously, storage stability of coating may be maintained. More specifically, the part derived from aliphatic dicarboxylic acid or derivatives thereof may be included in the content of 2 parts by weight or more, 3 parts by weight or more, or 4 parts by weight or more, and 14 parts by weight or less, 13 parts by weight or less, or 12 parts by weight or less, based on 100 parts by weight of the polyester resin.

**Polyhydric alcohol**

Polyhydric alcohol used herein means main monomers constituting polyester copolymer together with the above-explained dicarboxylic acid or derivatives thereof.

The polyhydric alcohol may comprise one or more selected from the group consisting of ethylene glycol, diethylene glycol, neopentylglycol, cyclohexanedimethanol, 1,2-propanediol, 1,3-propanediol, 2-methyl-1,3-propanediol, 2-methylene-1,3-propanediol, 2-ethyl-1,3-propanediol, 2-isopropyl-1,3-propanediol, 2,2-dimethyl-1,3-propanediol, 2-butyl-2-ethyl-1,3-propanediol, 1,4-butanediol, 2,3-butanediol, 3-methyl-1,5-pentanediol, 3-methyl-2,4-pentanediol, 1,6-hexanediol, 1,2-cyclohexanediol, 1,4-cyclohexanediol and pentaerythritol, but specific examples of the polyhydric alcohol are not limited thereto.

Preferably, the part derived from polyhydric alcohol is included in the content of 2 to 60 parts by weight, based on 100 parts by weight of the polyester resin. In case polyhydric alcohol is included in the above content range, it may be suitable for preparing polyester resin together with dicarboxylic acid. More preferably, the part derived from polyhydric alcohol is included in the content of 3 parts by weight or more, 4 parts by weight or more, or 5 parts by weight or more, and 55 parts by weight or less, 50 parts by weight or less, or 45 parts by weight or less, based on 100 parts by weight of the polyester resin

**Polyester copolymer**

The polyester resin according to the invention may be prepared by steps of: copolymerizing the above-explained recycled bis-2-hydroxyethyl terephthalate, dicarboxylic acid or derivatives thereof, and polyhydric alcohol to prepare prepolymer (step 1); and preparing the prepolymer into polyester resin with a carboxyl terminus or hydroxyl terminus (step 2).

**Prepolymer preparation step**

The prepolymer preparation step comprises an esterification reaction step (step 1-1), and if necessary, a condensation polymerization reaction step (step 1-2) may be sequentially conducted.

The esterification reaction may be conducted in the presence of an esterification reaction catalyst, and as the esterification reaction catalyst, titanium-based compounds, germanium-based compounds, antimony-based compounds, aluminum-based compounds, tin-based compounds or mixtures thereof may be used.

As examples of the titanium-based compound, tetraethyl titanate, acetyltripropyl titanate, tetrapropyl titanate, tetrabutyl titanate, 2-ethylhexyl titanate, octylene glycol titanate, lactate titanate, triethanolamine titanate, acetylacetonate titanate, ethylacetoaceticester titanate, isostearyl titanate, titanium dioxide, and the like may be mentioned. As examples of the germanium-based compound, germanium dioxide, germanium tetrachloride, germanium ethylene glycoxide, germanium acetate, a copolymer using them, or a mixture thereof, and the like may be mentioned. Preferably, germanium dioxide may be used, and as such germanium dioxide, both crystalline or amorphous germanium dioxide may be used, and glycol-soluble germanium dioxide may also be used. As examples of the tin-based compounds, monobutyl tin oxide, dibutyl tin oxide, tetrabutyl dibutoxy tin oxide, and the like may be mentioned. Preferably, tin-based compounds may be used.

The esterification reaction may be conducted at a pressure of 0 to 10.0 kg/cm$^2$ and a temperature of 150 to 300°C. The esterification reaction conditions may be appropriately controlled according to specific properties of prepared polyester, component ratio, or process conditions, and the like. Specifically, preferable examples of the esterification reaction conditions may include a pressure of 0 to 5.0kg/cm$^2$, more preferably 0.1 to 3.0 kg/cm$^2$; a temperature of 200 to 270°C, more preferably 230 to 260°C.

Further, the esterification reaction may be conducted batch wise or continuously, and the raw materials may be separately introduced, but it is preferable to introduce in the form of slurry in which dicarboxylic acid components and recycled bis-2-hydroxyethyl terephthalate are mixed with alcohol components. Further, an alcohol component such as neopentyl glycol (2,2-dimethyl-1,3-propanediol) that is solid at room temperature may be dissolved in water, and then, mixed with dicarboxylic acid components such as terephthalic acid to form a slurry. Alternatively, after neopentylglycol is molten at 60°C or more, it may be mixed with dicarboxylic acid components such as terephthalic acid and other alcohol components to form a slurry. Further, water may be additionally introduced in the mixed slurry to assist in increase in the flowability of the slurry.

The condensation polymerization reaction may be conducted by reacting the esterification reaction product at a temperature of 150 to 300 °C and a reduced pressure of 600 to 0.01 mmHg for 1 to 24 hours.

Such a condensation polymerization reaction may be conducted at a reaction temperature of 150 to 300°C, preferably 200 to 290°C, more preferably 230 to 260°C; and a reduced pressure of 600 to 0.01mmHg, preferably 200 to 0.05 mmHg, more preferably 100 to 0.1 mmHg. By applying reduced pressure condition to the condensation polymerization reaction, glycol, the by-product of the condensation polymerization, may be removed outside system, and thus, if the reduced pressure condition of the condensation polymerization reaction does not fall within 400 to 0.01 mmHg, removal of by-products may be insufficient. Further, in case the condensation polymerization reaction is conducted outside a temperature range of 150 to 300°C, if the condensation polymerization reaction is progressed at 150°C or less, glycol, the by-products of the condensation polymerization reaction, may not be effectively removed outside, and thus, intrinsic viscosity of the final reaction product may be low, and the properties of prepared resin may be deteriorated, and if the reaction is progressed at 300°C or more, prepared polyester resin may be yellowed. Further, the condensation polymerization reaction may be progressed for a time until the intrinsic viscosity of the final reaction product reaches an appropriate level, for example, for an average residence time of 1 to 24 hours.

The condensation polymerization reaction may be conducted in the presence of a condensation polymerization catalyst including titanium-based compounds, germanium-based compounds, antimony-based compounds, aluminum-based compounds, tin-based compounds or mixtures thereof may be used.

As examples of the titanium-based compound, tetraethyl titanate, acetyltripropyl titanate, tetrapropyl titanate, tetrabutyl titanate, 2-ethylhexyl titanate, octylene glycol titanate, lactate titanate, triethanolamine titanate, acetylacetonate titanate, ethylacetoacetic ester titanate, isosteary titanate, titanium dioxide, and the like may be mentioned. As examples of the germanium-based compounds, germanium dioxide, germanium tetrachloride, germanium ethyleneglycoxide, germanium acetate, a copolymer using the same, or a mixture thereof, and the like may be mentioned. As examples of the tin-based compounds, monobutyl tin oxide, dibutyl tin oxide, tetrabutyl dibutoxy tin oxide, and the like may be mentioned. Preferably, tin-based compounds may be used.

**Preparation step of carboxyl-terminated or hydroxyl-terminated polyester resin**

After preparing the prepolymer, in order to prepare polyester resin for powder coating, carboxyl-terminated or hydroxyl-terminated polyester is prepared.

In order to use the prepolymer prepared in the step 1 as powder coating, a terminus should consist of functional groups that react with a curing agent. The functional groups of a terminus vary according to the kind of curing agents, and may be largely classified into a carboxylic acid terminus and a hydroxyl terminus.

For the carboxyl termination reaction, polyvalent carboxylic acid or anhydrides thereof may be used, and examples of the carboxylic acid, the above-explained dicarboxylic acid may be mentioned. Preferably, isophthalic acid, adipic acid, or trimellitic anhydride may be used. Meanwhile, in order to facilitate the introduction of carboxylic acid, the carboxyl termination may be progressed after progressing hydroxyl termination of the prepolymer. The hydroxyl termination reaction may be progressed by controlling reaction conditions without additional materials.

The carboxyl termination reaction may be conducted at a reaction temperature of 150 to 300°C, preferably 180 to 250°C; and a reduced pressure of 600 to 0.01 mmHg, preferably 200 to 1 mmHg. By applying a reduced pressure condition to the carboxyl termination reaction, molecular weight of polyester resin may be appropriately controlled. Further, if the carboxyl termination reaction is progressed at a temperature less than 150°C, condensation water may not be effectively removed outside system, thus deteriorating the properties of polyester resin, and if it is progressed at a temperature greater than 300°C, it is more likely that polyester resin prepared may be yellowed. Further, the reaction may be progressed until aimed acid value and viscosity of the final reaction product are reached, and may be progressed for an average residence time of 1 to 24 hours.

The polyester resin of the invention prepared by a series of preparation steps as explained above is terminated with an acid part derived from the dicarboxylic acid or derivatives thereof, and thus, has carboxy groups at both ends. Thus, when used in a powder coating composition, a smooth reaction with a curing agent may be progressed.

Meanwhile, the polyester resin of the invention has an acid value of 20 to 100 mgKOH/g. Specific measuring method of acid value will be embodied in examples described later. If the acid value is less than 20 mg KOH/g, due to high viscosity, grindability, dispersibility, and the like may be deteriorated, and thus, it may not be suitable for powder coating, and if the acid value is greater than 100 mgKOH/g, due to low molecular weight, it may not be suitable for resin for powder coating. More preferably, the acid value of the polyester resin may be 25 mgKOH/g or more, or 27 mgKOH/g or more, and 90 mgKOH/g or less, 80 mgKOH/g or less, or 75 mgKOH/g or less.

Further, a hydroxyl termination reaction may be progressed by controlling reaction conditions after preparing prepolymer, as explained above. Specifically, after preparing prepolymer, by progressing polymerization under vacuum condition of 10 to 100 mmHg and breaking vacuum when aimed hydroxyl value and viscosity are reached to terminate the reaction, hydroxyl-terminated polyester resin may be prepared.

After the hydroxyl termination reaction, the polyester resin of the invention has a hydroxyl value of 20 to 100 mgKOH/g. The hydroxyl value may be measured by a method commonly used in the art, and for example, the hydroxyl value may be measured on the basis of the titration amount of 0.5N KOH, after subjecting polyester resin dissolved in a neutral solvent to an acetylation reaction. If the hydroxyl value is less than 20 mg KOH/g, due to high viscosity, grindability, dispersibility, and the like may be deteriorated, and thus, it may not be suitable for powder coating, and if it is greater than 100 mgKOH/g, due to low molecular weight, it may not be suitable for resin for powder coating. More preferably, the hydroxyl value of the polyester resin may be 25 mgKOH/g or more, or 27 mgKOH/g or more, and 90 mgKOH/g or less, 80 mgKOH/g or less, or 75 mgKOH/g or less.

Moreover, according to the invention, there is provided a powder coating composition comprising the polyester resin. Preferably, the polyester resin is included in the content of 20 to 80 parts by weight, more preferably, 25 parts by weight or more, 30 parts by weight or more, 40 parts by weight or more, or 45 parts by weight or more, and 75 parts by weight or less, 70 parts by weight or less, 65 parts by weight or less, or 60 parts by weight or less, based on 100 parts by weight of the powder coating composition.

Further, the powder coating composition of the invention may further comprise a curing agent, a filler, a catalyst, a flow improver, an anti-pinhole agent, a leveling agent, an antioxidant, and the like.

[Effects]

The above-explained polyester resin according to the invention comprises recycled monomers, and thus, is environment-friendly, and when preparing a powder coating composition, the qualities are not deteriorated and the properties are uniform, and thus, it may replace general polyester resin.

[Best Mode for Carrying Out the Invention]

Hereinafter, preferable examples will be presented to assist in understanding of the invention. However, the following examples are provided only for better understanding of the invention, and the scope of the invention is not limited thereby.

**Example 1-1**

Step 1: Preparation of prepolymer

Terephthalic acid (309 g), adipic acid (41 g), neopentyl glycol (88 g), bis-2-hydroxyethylterephthalate (476 g), and monobutyl tin oxide as a catalyst (0.5 g) were added to a four-neck flask. While stirring the contents of the flask, they were heated to a temperature of about 230°C under nitrogen. The reaction was conducted until the contents became transparent and condensed water did not emerge.

Step 2: Preparation of carboxyl-terminated polyester resin

After adding isophthalic acid (85 g) at 230°C, it was reacted while removing condensed water. After confirming transparency, in order to reach aimed molecular weight, a vacuum reaction (10 ~ 100 mmHg) was progressed. When an aimed acid value (30-33 mg KOH/g) was reached, vacuum was broken and the temperature was decreased to 200 °C, and then, discharge was progressed.

**Example 1-2**

Step 1: Preparation of prepolymer

Terephthalic acid (394 g), adipic acid (24 g), neopentyl glycol (160 g), bis-2-hydroxyethylterephthalate (365 g), and monobutyl tin oxide as a catalyst (0.5 g) were added to a four-neck flask. While stirring the contents of the flask, they were heated to a temperature of about 230°C under nitrogen. The reaction was conducted until the contents became transparent and condensed water did not emerge.

Step 2: Preparation of carboxyl-terminated polyester resin

After adding isophthalic acid (57 g) at 230°C, it was reacted while removing condensed water. After confirming transparency, in order to reach aimed molecular weight, a vacuum reaction (10 ~ 100 mmHg) was progressed. When an aimed acid value (30-33 mg KOH/g) was reached, vacuum was broken and the temperature was decreased to 200 °C, and then, discharge was progressed.

**Example 1-3**

Step 1: Preparation of prepolymer

Terephthalic acid (432 g), adipic acid (18 g), neopentyl glycol (222 g), bis-2-hydroxyethylterephthalate (258 g), and monobutyl tin oxide as a catalyst (0.5 g) were added to a four-neck flask. While stirring the contents of the flask, they were heated to a temperature of about 230°C under nitrogen. The reaction was conducted until the contents became transparent and condensed water did not emerge.

Step 2: Preparation of carboxyl-terminated polyester resin

After adding isophthalic acid (70 g) at 230°C, it was reacted while removing condensed water. After confirming transparency, in order to reach aimed molecular weight, a vacuum reaction (10 ~ 100 mmHg) was progressed. When an aimed acid value (30-33 mg KOH/g) was reached, vacuum was broken and the temperature was decreased to 200 °C, and then, discharge was progressed.

**Example 1-4**

Step 1: Preparation of prepolymer

Terephthalic acid (457 g), adipic acid (18 g), neopentyl glycol (263 g), bis-2-hydroxyethylterephthalate (187 g), and monobutyl tin oxide as a catalyst (0.5 g) were added to a four-neck flask. While stirring the contents of the flask, they were heated to a temperature of about 230°C under nitrogen. The reaction was conducted until the contents became transparent and condensed water did not emerge.

Step 2: Preparation of carboxyl-terminated polyester resin

After adding isophthalic acid (74 g) at 230°C, it was reacted while removing condensed water. After confirming transparency, in order to reach aimed molecular weight, a vacuum reaction (10 ~ 100 mmHg) was progressed. When an aimed acid value (30-33 mg KOH/g) was reached, vacuum was broken and the temperature was decreased to 200 °C, and then, discharge was progressed.

**Example 1-5**

Step 1: Preparation of prepolymer

Terephthalic acid (534 g), adipic acid (25 g), neopentyl glycol (304 g), bis-2-hydroxyethylterephthalate (69 g), and monobutyl tin oxide as a catalyst (0.5 g) were added to a four-neck flask. While stirring the contents of the flask, they were heated to a temperature of about 230°C under nitrogen. The reaction was conducted until the contents became transparent and condensed water did not emerge.

Step 2: Preparation of carboxyl-terminated polyester resin

After adding isophthalic acid (67 g) at 230°C, it was reacted while removing condensed water. After confirming transparency, in order to reach aimed molecular weight, a vacuum reaction (10 ~ 100 mmHg) was progressed. When an aimed acid value (30-33 mg KOH/g) was reached, vacuum was broken and the temperature was decreased to 200 °C, and then, discharge was progressed.

**Example 1-6**

Step 1: Preparation of prepolymer

Terephthalic acid (413 g), adipic acid (22 g), neopentyl glycol (242 g), diethylene glycol (43 g), bis-2-hydroxyethylterephthalate (167 g), and monobutyl tin oxide as a catalyst (0.5 g) were added to a four-neck flask. While stirring the contents of the flask, they were heated to a temperature of about 230°C under nitrogen. The reaction was conducted until the contents became transparent and condensed water did not emerge.

Step 2-1: Preparation of hydroxyl-terminated polyester resin

In order to reach aimed molecular weight, a vacuum reaction (10 ~ 100 mmHg) was progressed. When the acid value dropped below 5, vacuum was broken and the temperature was decreased to 185°C.

Step 2-2: Preparation of carboxyl-terminated polyester resin

After adding trimellitic anhydride (112 g) at 185°C, an atmospheric pressure reaction was progressed until an aimed acid value was reached. When the aimed acid value (70 ~ 75 mg KOH/g) was reached, discharge was progressed.

**Example 1-7**

Step 1: Preparation of prepolymer

Terephthalic acid (438 g), adipic acid (22 g), neopentyl glycol (241 g), diethylene glycol (46 g), bis-2-hydroxyethylterephthalate (174 g), and monobutyl tin oxide as a catalyst (0.5 g) were added to a four-neck flask. While stirring the contents of the flask, they were heated to a temperature of about 230°C under nitrogen. The reaction was conducted until the contents became transparent and condensed water did not emerge.

Step 2-1: Preparation of hydroxyl-terminated polyester resin

In order to reach aimed molecular weight, a vacuum reaction (10 ~ 100 mmHg) was progressed. When the acid value dropped below 5, vacuum was broken and the temperature was decreased to 185°C.

Step 2-2: Preparation of carboxyl-terminated polyester resin

After adding trimellitic anhydride (79 g) at 185°C, an atmospheric pressure reaction was progressed until an aimed acid value was reached. When the aimed acid value (50 ~ 55 mg KOH/g) was reached, discharge was progressed.

**Comparative Example 1-1**

Step 1: Preparation of prepolymer

Terephthalic acid (554 g), adipic acid (19 g), neopentyl glycol (291 g), ethylene glycol (57 g), and monobutyl tin oxide as a catalyst (0.5 g) were added to a four-neck flask. While stirring the contents of the flask, they were heated to a temperature of about 230°C under nitrogen. The reaction was conducted until the contents became transparent and condensed water did not emerge.

Step 2: Preparation of carboxyl-terminated polyester resin

After adding isophthalic acid (77 g) at 230°C, it was reacted while removing condensed water. After confirming transparency, in order to reach aimed molecular weight, a vacuum reaction (10 ~ 100 mmHg) was progressed. When an aimed acid value (30-33 mg KOH/g) was reached, vacuum was broken and the temperature was decreased to 200 °C, and then, discharge was progressed.

**Comparative Example 1-2**

Step 1: Preparation of prepolymer

Terephthalic acid (534 g), adipic acid (23 g), neopentyl glycol (278 g), ethylene glycol (28 g), diethylene glycol (58 h), and monobutyl tin oxide as a catalyst (0.5 g) were added to a four-neck flask. While stirring the contents of the flask, they were heated to a temperature of about 230°C under nitrogen. The reaction was conducted until the contents became transparent and condensed water did not emerge.

Step 2-1: Preparation of hydroxyl-terminated polyester resin

In order to reach aimed molecular weight, a vacuum reaction (10 ~ 100 mmHg) was progressed. When the acid value dropped below 5, vacuum was broken and the temperature was decreased to 185°C.

Step 2-2: Preparation of carboxyl-terminated polyester resin

After adding trimellitic anhydride (79 g) at 185°C, an atmospheric pressure reaction was progressed until an aimed acid value was reached. When the aimed acid value (50 ~ 55 mg KOH/g) was reached, discharge was progressed.

For the polyester resins of Examples 1-1 to 1-7 and Comparative Examples 1-1 and 1-2, the properties were measured as follows, and the results were shown in the following Table 1.

(1) Acid value (mg KOH/g)

An acid value was measured on the basis of the titration amount of 0.5 N KOH.

(2) Viscosity(cps)

Using a Brookfield viscometer (CAP 2000) equipped with a viscometer, melt viscosity was measured at 200°C.

[Table 1]

|  | Acid value (mg KOH/g) | Viscosity (cps) |
|---|---|---|
| Example 1-1 | 31.5 | 3100 |
| Example 1-2 | 30 | 4300 |
| Example 1-3 | 30 | 4100 |
| Example 1-4 | 29.5 | 3900 |
| Example 1-5 | 31.6 | 3250 |
| Example 1-6 | 74 | 8000(@175°C) |
| Example 1-7 | 54 | 2800 |
| Comparative Example 1-1 | 31 | 3600 |
| Comparative Example 1-2 | 50 | 4200 |

As confirmed in the Table 1, the polyester resin using recycled monomers according to the invention has acid value and viscosity equivalent to or above those of polyester resin that does not comprise recycled monomers.

To the polyester resins prepared in Examples 1 to 7 and Comparative Example 1, a curing agent, pigment, a pinhole improver, and a flow improved, and the like were added in the contents described in the following Table 2 to prepare powder coating.

Curing agent: Epikote 193 (product from Hexion company, epoxy resin), HAA (hydroxyalkylamide)

Pigment: $TiO_2$ (titanium dioxide, white pigment)

Pinhole improver: benzoin

Flow improver: Modaflow 6000 (product from allnex company)

Cure catalyst: AD P964 (product from ENTIS Company)

[Table 2]

| | Kind of polyester resin | Content of polyester resin (g) | Epiko te 193 (g) | HA A (g) | TiO$_2$ (g) | Benz oin (g) | Modafl ow 6000 (g) | AD P964 (g) |
|---|---|---|---|---|---|---|---|---|
| Example 2-1 | Example 1-1 | 555.8 | - | 29. 3 | 400 | 5 | 10 | - |
| Example 2-2 | Example 1-2 | 555.8 | - | 29. 3 | 400 | 5 | 10 | - |
| Example 2-3 | Example 1-3 | 555.8 | - | 29. 3 | 400 | 5 | 10 | - |
| Example 2-4 | Example 1-4 | 555.8 | - | 29. 3 | 400 | 5 | 10 | - |
| Example 2-5 | Example 1-5 | 555.8 | - | 29. 3 | 400 | 5 | 10 | - |
| Example 2-6 | Example 1-6 | 292.5 | 292.5 | - | 400 | 5 | 10 | 29 |
| Example 2-7 | Example 1-7 | 351 | 234 | - | 400 | 5 | 10 | 35 |
| Comparat ive Example 2-1 | Comparati ve Example 1-1 | 555.8 | - | 29. 3 | 400 | 5 | 10 | - |

For the powder coating compositions prepared in Examples 2-1 to 2-7 and Comparative Example 2-1, the properties were evaluated as follows.

(1) Cure speed (gel time)

0.2 g of the coating was put on a plate heater to 180°C, and then, a time taken for hardening from a liquid state was measured.

(2) Gloss

According to ASTM D523, using a glossmeter (BYK, AG 4446), light was emitted to the coated film at the angles of 20°, 60°, and the amount of light reflected was measured.

(3) Impact

According to ASTM D2794, a 2 kg weight was dropped from a height of 60 cm, and it was confirmed whether cracks were generated or note.

- DI: Direct impact strength
- RI: Reverse impact strength

(4) Appearance (PCI smoothness standards)

The appearance of a coated film was compared with a standard panel (Manufacturing company: ACT manufacture, PIC Powder Smoothness Standards) with the unaided eye, and marked as numerical values of 1 to 10.

   1: Severe Orange Peel
   10: Excellent appearance

(5) Chemical Resistance

The upper part of a coated film was rubbed 50 times back and forth with a cotton pad impregnated with MEK (methyl ethyl ketone), and then, the state of the coated film was confirmed.

- no: No appearance abnormality

- S: Partial occurrence of scratch

- SS: Partial occurrence of gloss loss

- SSS: Remarkable gloss loss

(6) Boiling water resistance

After leaving a coated specimen in boiling water for 2 hours, the initial gloss before leaving and the gloss after leaving (60°) were measured, and boiling water resistance was measured as follows.

$$\text{Boiling water resistance}(\%) = \text{gloss after leaving / initial gloss}$$

The results were shown in the following Table 3.

[Table 3]

|  | Cure speed (sec) | Gloss (20/60) | Impact (DI/RI, kg*cm) | Appearance | Chemical resistance | Boiling water resistance (%) |
|---|---|---|---|---|---|---|
| Example 2-1 | 131 | 77.4/94.6 | 120 / 120 | 5 | No | 94.7 |
| Example 2-2 | 127 | 83.4/96.0 | 120 / 120 | 6 | S | 97.2 |
| Example 2-3 | 131 | 84.9/95.7 | 120 / 120 | 6 | S | 90.3 |
| Example 2-4 | 152 | 85.7/95.1 | 120 / 120 | 6 | S | 79.1 |
| Example 2-5 | 155 | 85.71/94.6 | 120 / 120 | 6 | S | 75.6 |
| Example 2-6 | 203 | 93.7/100 | 120 / 120 | 7 | no | 99.0 |
| Example 2-7 | 205 | 90.7/99.1 | 120 / 120 | 6 | S | 74.2 |
| Comparative Example 2-1 | 155 | 85.4/95.5 | 120 / 120 | 6 | S | 95.0 |

As confirmed in the Table 3, although the powder coating composition comprising polyester resin comprising recycled-bis-2-hydroxyethylterephthalate of the invention comprises polyester resin using recycled monomers, it has gloss, impact, appearance property and chemical resistance equivalent to or over those of the powder coating composition of Comparative Example, and realizes properties suitable for use in powder coating.

**Claims**

1. Polyester resin polymerized from

   1) recycled bis-2-hydroxyethyl terephthalate,
   2) acid comprising dicarboxylic acid or derivatives thereof, and
   3) polyhydric alcohol different from the recycled bis-2-hydroxyetyl terephthalate,

   and

   having a structure in which a part derived from the bis-2-hydroxyethyl terephthalate, a part derived from the dicarboxylic acid or derivatives thereof, and a part derived from the polyhydric alcohol are repeated,
   wherein the part derived from the recycled bis-2-hydroxyethyl terephthalate is included in the content of 1 to 50 parts by weight, based on 100 parts by weight of the polyester resin.

2. The polyester resin according to claim 1, wherein the part derived from the recycled bis-2-hydroxyethyl terephthalate is included in the content of 4 to 30 parts by weight, based on 100 parts by weight of the polyester resin.

3. The polyester resin according to claim 1, wherein the acid comprises aromatic dicarboxylic acid or derivatives thereof, and aliphatic dicarboxylic acid or derivatives thereof.

4. The polyester resin according to claim 3, wherein the aromatic dicarboxylic acid or derivatives thereof comprise one or more selected from the group consisting of terephthalic acid, isophthalic acid, phthalic acid, trimellitic acid, 2,6-naphthalene dicarboxylate, diphenyl dicarboxylic acid, 4,4'-stilbenedicarboxylic acid, 2,5-furanedicarboxylic acid, 2,5-thiophenedicarboxylic acid, dimethyl terephthalate, dimethyl isophthalate, trimellitic anhydride, and phthalic anhydride.

5. The polyester resin according to claim 3, wherein the part derived from the aromatic dicarboxylic acid or derivatives thereof is included in the content of 20 to 80 parts by weight, based on 100 parts by weight of the polyester resin.

6. The polyester resin according to claim 3, wherein the aliphatic dicarboxylic acid or derivatives thereof comprise one or more selected from the group consisting of adipic acid, succinic acid, sebacic acid, isodecylsuccinic acid, maleic acid, fumaric acid, glutaric acid, 1,4-cyclohexanedicarboxylic acid, 1,3-cyclohexanedicarboxylic acid, and hexahydrophthalic anhydride.

7. The polyester resin according to claim 3, wherein the part derived from the aliphatic dicarboxylic acid or derivatives thereof is included in the content of 1 to 15 parts by weight, based on 100 parts by weight of the polyester resin.

8. The polyester resin according to claim 1, wherein the polyhydric alcohol comprises one or more selected from the group consisting of ethylene glycol, diethylene glycol, neopentylglycol, cyclohexanedimethanol, 1,2-propanediol, 1,3-propanediol, 2-methyl-1,3-propanediol, 2-methylene-1,3-propanediol, 2-ethyl-1,3-propanediol, 2-isopropyl-1,3-propanediol, 2,2-dimethyl-1,3-propanediol, 2-butyl-2-ethyl-1,3-propanediol, 1,4-butanediol, 2,3-butanediol, 3-methyl-1,5-pentanediol, 3-methyl-2,4-pentanediol, 1,6-hexanediol, 1,2-cyclohexanediol, 1,4-cyclohexanediol and pentaerythritol.

9. The polyester resin according to claim 1, wherein the part derived from the polyhydric alcohol is included in the content of 2 to 60 parts by weight, based on 100 parts by weight of the polyester resin.

10. The polyester resin according to claim 1, wherein the polyester resin is terminated with the acid part derived from dicarboxylic acid or derivatives thereof, and has carboxyl groups at both ends.

11. The polyester resin according to claim 1, wherein the polyester resin has an acid value of 20 to 100 mgKOH/g.

12. The polyester resin according to claim 1, wherein the polyester resin has a hydroxyl value of 20 to 100 mgKOH/g.

13. A powder coating composition comprising the polyester resin according to any one of claims 1 to 12.

14. The powder coating composition according to claim 13, wherein the polyester resin is included in the content of 20 to 80 parts by weight, based on 100 parts by weight of the powder coating composition.

# EP 4 603 526 A1

<table>
<tr><td colspan="2"><strong>INTERNATIONAL SEARCH REPORT</strong></td><td>International application No.<br><br><strong>PCT/KR2023/014082</strong></td></tr>
</table>

| A. | CLASSIFICATION OF SUBJECT MATTER |
|---|---|

**C08G 63/60**(2006.01)i; **C09D 5/03**(2006.01)i; **C09D 167/03**(2006.01)i

According to International Patent Classification (IPC) or to both national classification and IPC

| B. | FIELDS SEARCHED |
|---|---|

Minimum documentation searched (classification system followed by classification symbols)

C08G 63/60(2006.01); C07C 67/52(2006.01); C07C 69/82(2006.01); C08G 63/183(2006.01); C08G 63/199(2006.01); C08L 67/02(2006.01); C08L 67/03(2006.01); C09D 167/00(2006.01); C09D 5/03(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 폴리에스테르 수지(polyester resin), 재사용 비스-2-히드록시에틸테레프탈레이트(recycled bis-2-hydroxyethylterephthalate), 디카르복실산(dicarboxylic acid), 알코올 (alcohol), 분체 도료(powder coating)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | KR 10-2022-0064077 A (SK CHEMICALS CO., LTD.) 18 May 2022 (2022-05-18)<br>See paragraphs [0028] and [0030]; and claims 1 and 4-5. | 1-9,11-12 |
| Y | | 10,13-14 |
| Y | KR 10-1514991 B1 (EPI CO., LTD. et al.) 29 April 2015 (2015-04-29)<br>See paragraph [0037]; and claim 1. | 10,13-14 |
| A | KR 10-2021-0039085 A (SK CHEMICALS CO., LTD.) 09 April 2021 (2021-04-09)<br>See entire document. | 1-14 |
| A | KR 10-2020-0061948 A (LOTTE CHEMICAL CORPORATION) 03 June 2020 (2020-06-03)<br>See entire document. | 1-14 |

☑ Further documents are listed in the continuation of Box C.   ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **29 December 2023** | **29 December 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

13

**INTERNATIONAL SEARCH REPORT**

| International application No. |
| --- |
| **PCT/KR2023/014082** |

**C.      DOCUMENTS CONSIDERED TO BE RELEVANT**

| Category* | Citation of document, with indication, where appropriate, of the relevant passages | Relevant to claim No. |
| --- | --- | --- |
| A | WO 2021-066306 A1 (SK CHEMICALS CO., LTD.) 08 April 2021 (2021-04-08)<br>    See entire document. | 1-14 |

Form PCT/ISA/210 (second sheet) (July 2022)

## INTERNATIONAL SEARCH REPORT
### Information on patent family members

International application No.

**PCT/KR2023/014082**

| Patent document cited in search report | | | Publication date (day/month/year) | Patent family member(s) | | | Publication date (day/month/year) |
|---|---|---|---|---|---|---|---|
| KR | 10-2022-0064077 | A | 18 May 2022 | CN | 116406403 | A | 07 July 2023 |
| | | | | EP | 4245790 | A1 | 20 September 2023 |
| | | | | KR | 10-2583653 | B1 | 26 September 2023 |
| | | | | WO | 2022-102936 | A1 | 19 May 2022 |
| KR | 10-1514991 | B1 | 29 April 2015 | None | | | |
| KR | 10-2021-0039085 | A | 09 April 2021 | WO | 2021-066306 | A1 | 08 April 2021 |
| KR | 10-2020-0061948 | A | 03 June 2020 | None | | | |
| WO | 2021-066306 | A1 | 08 April 2021 | KR 10-2021-0039085 | | A | 09 April 2021 |

Form PCT/ISA/210 (patent family annex) (July 2022)

**REFERENCES CITED IN THE DESCRIPTION**

**Patent documents cited in the description**

- KR 1020220132210